# EUROPEAN PATENT APPLICATION

(11) **EP 4 358 282 A1**
(43) Date of publication of application: **24.04.2024**
(21) Application number: 23816393.5
(22) Date of filing: 01.06.2023
(51) Int. Cl.: H01M 50/59, H01M 50/204, H01M 50/244, H01M 50/289, H01M 50/502, H01M 50/569, H01M 50/584, H01M 50/24

(54) **BATTERY PACK**

(30) Priority: 03.06.2022 KR 20220068260
(71) Applicant: LG Energy Solution, Ltd., Seoul 07335 (KR)
(72) Inventor: YANG, Chang Hyeon, Daejeon 34122 (KR); SHIN, Ju Hwan, Daejeon 34122 (KR)
(74) Representative: Plasseraud IP
(86) International application number: PCT/KR2023/007550
(87) International publication number: WO 2023/234733

(57) **Abstract**

The present technology relates to a battery pack. Particularly, the battery pack is provided and is characterized including a pack case that includes external terminals formed on one side and contains a plurality of battery modules inside; and a protective frame that extends across the pack case and defines the module area; and a busbar that electrically connects the battery modules and the external terminals of the pack case; and a battery management unit located on the other side opposite to the pack case from where the external terminals are formed; and the protective frame includes slot extending along the length direction of the protective frame, and the module area is compartmentalized by the protective frame and includes a first battery part formed on one side of the protective frame and a second battery part formed on the opposite side of the protective frame, and the busbar is inserted and secured within the slots of the protective frame, and the protective frame surrounds its sides.

## Description

### [Technical Field]

The present invention relates to a battery pack. More particularly, the present invention relates to a battery pack having a structure capable of protecting busbars or wires, etc. installed inside the battery pack from high-temperature, high-pressure gas when a thermal runaway occurs in any one of a plurality of battery modules arranged inside the battery pack, resulting in the generation of high-temperature and high-pressure gas.

This application claims the benefit of priority to Korean Patent Application No. 10-2022-0068280, filed on June 3, 2022, and entire contents of the Korean patent application are incorporated herein by reference.

### [Background Art]

In contrast to primary batteries which cannot be recharged, secondary batteries refer to the battery that can be charged and discharged and are applied to portable devices as well as electric and hybrid vehicles powered by electricity. Currently, popular types of secondary batteries include lithium-ion cells, lithium polymer cells, nickel-cadmium cells, nickel-hydrogen cells, nickel-zinc cells, etc. These unit secondary battery cells, i.e. unit battery cells, have an operating voltage of about 2.5 V to 4.2 V. Therefore, if a higher output voltage is required, a plurality of battery cells may be connected in series to form a battery pack. In addition, depending on the charge and discharge capacity required for the battery pack, a plurality of battery cells may be connected in parallel to form a battery pack. Thus, the number of battery cells included in the battery pack may be varied depending on the required output voltage or charge/discharge capacity.

When forming a battery pack by connecting a plurality of battery cells in series/parallel, it is common to first form a battery module of the plurality of battery cells, and then add other components to form a battery pack using the battery module. Here the battery module refers to a component with a plurality of secondary cells connected in series or parallel, and battery pack refers to a component with a plurality of battery module connected in series or parallel to increase capacity, power output, etc.

Further, the battery pack may include a battery management unit with a Battery Management System (BMS) that measures current, voltage, temperature, etc. of the battery cells or battery modules to estimate the state of charge, state of power, and state of performance of the battery, and controls them to be more energy efficient.

Each battery module is not directly connected to the external terminal of the battery pack, but is connected to the external terminal through the battery management unit, and the battery management unit checks the flow of current between the external terminal of the battery pack and the battery module. Generally, the battery management unit is installed inside the battery pack in opposite positions to the external terminals. Here, a busbar of a long length may be used to connect the battery management unit and the external terminal or the battery management unit and the battery module. In addition, to measure the condition of each battery module, separate measurement wires can be used from the battery management unit.

The busbar and measurement wires are typically installed across the battery pack through the space between the battery modules.

However, if thermal runaway occurs due to a failure of the battery cells contained in the battery module, high-temperature and high-pressure gas may be generated and emitted from the battery module, and the emitted gas may damage the busbar or damage the insulation sheath of the measurement wire. In addition, the damaged wires and busbars, etc. may interfere with the internal structure of the battery pack, or may short-circuit and cause a large explosion at the battery pack unit.

Therefore, there is a need in the art for a battery pack having a structure capable of protecting the busbar and the wire or the like from high-temperature gas that may be generated frequently.

### [Disclosure]

### [Technical Problem]

The present invention is directed to providing a battery pack capable of preventing a busbar and a measurement wire, etc. installed inside the battery pack from being damaged or shortcircuited when a high temperature and high pressure gas is emitted from a battery module.

Other objects and advantages of the present invention will be understood from the following description, and will become apparent from the example embodiments of the present invention. Furthermore, it will be readily apparent that the objects and advantages of the present invention may be realized by the methods and combinations thereof disclosed in the claims of the patent.

### [Technical Solution]

According to the present invention, a battery pack is provided and is characterized by including: a pack case that includes external terminals formed on one side and contains a plurality of battery modules inside; and a protective frame that extends across the pack case and defines the module area; and a busbar that electrically connects the battery modules and the external terminals of the pack case; and a battery management unit located on the other side opposite to the pack case from where the external terminals are formed; and the protective frame includes slot extending along the length direction of the protective frame, and the module area is compartmentalized by the protective frame and includes a first battery part formed on one side of the protective frame and a second battery part formed on the opposite side of the protective frame, and the busbar is inserted and secured within the slots of the protective frame, and the protective frame surrounds its sides.

The slots may include: a first slot; and a second slot; formed in parallel and spaced apart at a predetermined distance from the upper part of the protective frame.

A through groove may be formed in the side of the protective frame to allow the slot to open to the outside.

The busbar may include a first busbar connecting the first battery part and the external terminal, and a second busbar connecting the second battery part and the external terminal.

The first busbar includes a first input busbar that electrically connects the battery management unit and the battery module and a first output busbar that electrically connects the battery management unit and the external terminals, and the second busbar may include a second input busbar that electrically connects the battery management unit and the battery module and a second output busbar that electrically connects the battery management unit and the external terminals.

The battery pack, further including a pair of measurement wires connected to the battery management unit and extending along the protective frame, and wherein the protective frame may include an insertion hole for allowing insertion of the measurement wires.

The insertion holes may include: a first insertion hole; and a second insertion hole; formed in parallel and spaced apart at a predetermined distance in the lower part of the protective frame, into which the measurement wires are respectively inserted.

The battery pack may further include an auxiliary frame extending along the protective frame at a lower part of the protective frame, and coupled to the protective frame.

The auxiliary frame includes an upper protrusion that protrudes in the length direction, and the protective frame includes a lower insertion part made along the length direction to allow for the insertion of the upper protrusion of the auxiliary frame, and the auxiliary frame can be coupled to the protective frame by inserting the upper protrusion into the lower insertion part of the protective frame.

The auxiliary frame may include an auxiliary slot extending along a longitudinal direction of the auxiliary frame at the upper part.

The protective frame may be coupled to the upper part of the auxiliary frame with both lower parts covering the auxiliary slots of the auxiliary frame.

The protective frame and the auxiliary frame may include a pair of auxiliary insertion holes compartmentalized and formed between the protective frame and the auxiliary frame by an upper protrusion of the auxiliary frame.

The battery modules may be arranged in parallel in the module area along a length direction of the protective frame.

### [Advantageous Effects]

According to the present invention, it is possible to effectively prevent the phenomenon that the busbars and measurement wires inside the battery pack are damaged or shortcircuited due to high-temperature and high-pressure gas generated by overheating or overcharging of the battery cells contained in the battery module. Furthermore, it is possible to effectively prevent the battery pack from exploding due to the above short circuit.

### [Brief Description of the Drawings]

FIG. 1 is a perspective view of a battery pack according to a first embodiment of the present invention.
FIG. 2 is a sectional view of the protective frame according to a first embodiment of the present invention.
FIG. 3 is a partial enlarged view of the battery pack according to a first embodiment of the present invention.
FIG. 4 is a diagram illustrating a sectional view of the protective frame of the battery pack according to a first embodiment of the present invention with the busbars inserted.
FIG. 5 is a plan view of a battery pack according to a first embodiment of the present invention.
FIG. 6 is a perspective view of the battery pack of FIG. 5.
FIG. 7 is a cross-sectional view of a protective frame and an auxiliary frame of a battery pack according to a second embodiment of the present invention.
FIG. 8 is a perspective view of a battery pack according to a second embodiment of the present invention.
FIG. 9 is a sequential illustration of the coupling of the protective frame and the auxiliary frame of the battery pack according to the second embodiment of the invention.
FIG. 10 is a perspective view of a pack case according to a second embodiment of the invention.

### [Detailed Description of the Preferred Embodiments]

Hereinafter, preferred embodiments of the present invention will be described in detail with reference to the accompanying drawings. Prior to the description, it should be under stood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

Therefore, the description proposed herein is just a preferable example for the purpose of illustrations only, not intended to limit the scope of the invention, so it should be understood that other equivalents and modifications could be made thereto without departing from the spirit and scope of the invention.

Additionally, in describing the present disclosure, when it is deemed that a detailed description of relevant known elements or functions renders the key subject matter of the present disclosure ambiguous, the detailed description is omitted herein.

The embodiments of the present disclosure are provided to give those skilled in the art a complete description of the present disclosure, and thus, the shape and size of elements in the drawings may be exaggerated or omitted or may be schematically illustrated for clarity. Accordingly, the size or propart of each element does not reflect the actual size or propart thoroughly.

The present invention relates to a battery pack 1000. More particularly, the present invention relates to a battery pack 1000 having a structure capable of protecting busbars 300 or wires, etc. installed inside the battery pack 1000 from high-temperature, high-pressure gas when a thermal runaway occurs in any one of a plurality of battery modules 10 arranged inside the battery pack 1000, resulting in the generation of high-temperature, high-pressure gas.

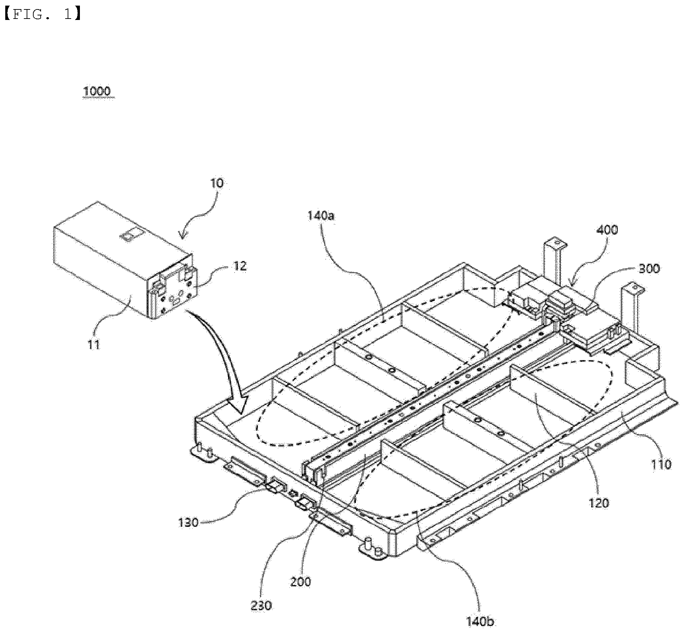

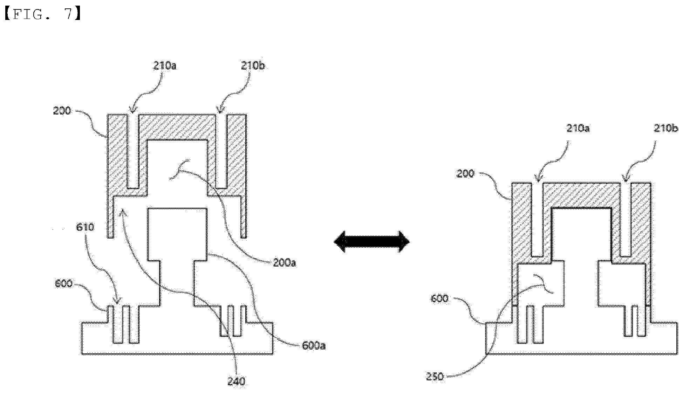

FIG. 1 to FIG. 6 relate to a battery pack 1000 according to a first embodiment of the present invention, and FIG. 7 to FIG. 10 relate to a battery pack 1000 according to a second embodiment of the present invention. Hereinafter, each embodiment will be described with reference to the above figures.

### [Modes of Invention]

### [First embodiment]

FIG. 1 is a perspective view of a battery pack 1000 according to a first embodiment of the present invention.

A battery pack 1000 according to the first embodiment of the present invention includes a pack case 100 in which a battery module 10 is contained, an upper case (not shown) covering an upper part of the pack case 100, a protective frame 200, a busbar 300, and a battery management unit 400, as shown in Figure 1. (Since the upper case corresponds to the known art, it will not be described in detail herein).

A battery module 10 contained in a battery pack 1000 of the present invention includes a cell stack (not shown) of a plurality of battery cells (not shown), and a module frame 11 and end plate 12 that surround and protect the cell stack. Further, it includes module terminal 12a, which is electrically connected with the electrode leads of each of the cells and protrudes outside the end plate 12. Here, the module terminal 12a consists of a positive module terminal 12a and a negative module terminal 12a, wherein the positive module terminal 12a and the negative module terminal 12a may be formed on one side or both sides of the end plate 12, respectively.

Each battery module 10 contained in the battery pack 1000 is electrically connected between the module terminals 12a, allowing the battery pack 1000 to have one output.

The pack case 100 includes a module area with an external terminal 130 formed on one side and a plurality of battery modules 10 stored therein.

The battery pack 1000 may charge or discharge the plurality of battery modules 10 stored therein via the external terminals 130. In other words, the external terminal 130 is configured to be electrically connected to an external charging or discharging device or the like, and is divided into a positive terminal and a negative terminal.

The pack case 100 may include a wall 120 for separating each stored battery cell from neighboring battery cells, with side walls 110 formed along a rim to protect the stored battery modules 10.

The battery pack 1000 includes a module area defined by the side walls 110, and each battery module 10 is arranged in the module area and stored in the battery pack 1000.

The upper case (not shown) is coupled to the pack case 100 at the top of the pack case 100 to cover each of the battery modules 10 to protect the top of the battery modules 10 stored inside the pack case 100.

The battery management unit 400 may include a battery management system (BMS) for measuring and controlling the current, voltage, temperature, etc. of each battery module 10 stored in the battery pack 1000, and may be provided on the other side of the pack case 100 opposite one side of the pack case 100 in which the external terminals 130 are formed.

The protective frame 200 is formed to extend across the pack case 100 and is installed in the center of the pack case 100.

The protective frame 200 may be screwed to the bottom of the pack case 100 by separate bolt members and secured to the pack case 100, may be bonded to the pack case 100 by adhesives or the like, and may be secured to the pack case 100 by welding or thermal fusion or the like.

A module area may be defined by the protective frame 200, and the module area defined by the protective frame 200 specifically includes a first battery part 140a formed on one side of the protective frame 200 and a second battery part 140b formed on the other side of the protective frame 200, wherein each of the first battery part 140a and the second battery part 140b has a plurality of modules arranged in parallel along a length direction of the protective frame 200.

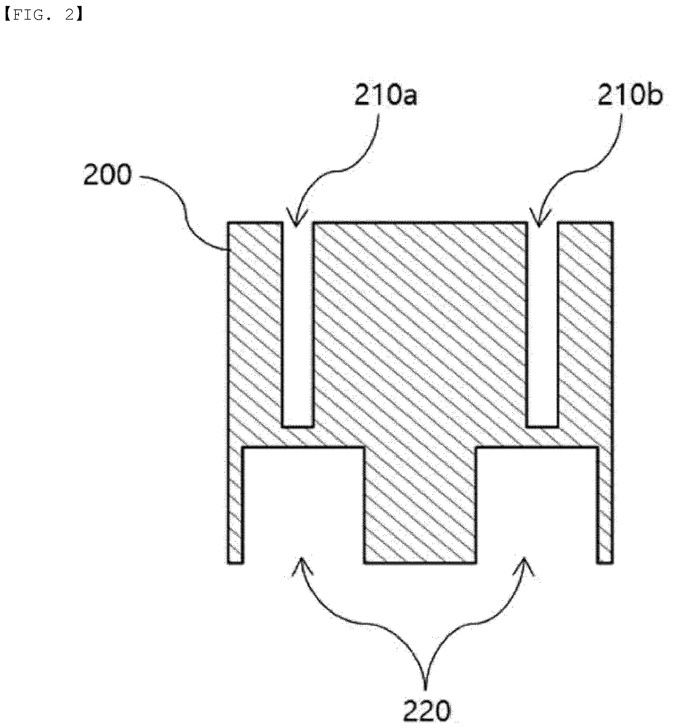

FIG. 2 is a cross sectional view of a protective frame 200 according to a first embodiment of the present invention. Referring to FIG. 2, the protective frame 200 includes a pair of slots 210 at the top. However, FIG. 2 is an example and there may be three or more slots 210.

The plurality of slots 210 are preferably formed at predetermined distances spaced apart.

According to FIG. 2, the slot 210 is formed extending along the longitudinal direction of the protective frame 200.

More specifically, the slots 210 include a first slot 210a extending along a length direction of the protective frame 200 at one side of the upper part of the protective frame 200, and a second slot 210b extending along a length direction of the protective frame 200 at a predetermined distance from the first slot 210a.

Further, the protective frame 200 may further include an insertion hole 220 corresponding to the slot 210.

At least one of the insertion holes 220 may be formed in the lower part of the protective frame 200, and the present invention describes two insertion holes 220 as an example.

The insertion hole 220 may be formed by recessing in a lower part of the protective frame 200 and extending along a length direction of the protective frame 200.

According to FIG. 2, the insertion hole 220 includes a first insertion hole 220 formed in a position corresponding to the first slot 210a and a second insertion hole 220 formed in a position corresponding to the second slot 210b.

In the present invention, the protective frame 200 is preferably made of a flame retardant material, since it is used for the purpose of resisting gases of high temperature and pressure emitted by the battery module 10.

The busbar 300 is installed inside the battery pack 1000 to electrically connect the battery module 10 and the external terminals 130 of the pack case 100.

The busbar 300 is used for the purpose of charging and discharging each of the battery modules 10 stored in the pack case 100.

The busbar 300 is disposed to traverse the pack case 100 and is preferably inserted into and secured to the slots 210 of the protective frame 200.

The busbar 300 includes a first busbar 300a connecting the battery module 10 of the first battery part 140a with the external terminal 130, and a second busbar 300b connecting the battery module 10 of the second battery part 140b with the external terminal 130.

Further, each of the busbars 300 may be characterized by an input busbar 310 electrically connecting the battery management unit 400 and the battery module 10, and an output busbar 320 electrically connecting the battery management unit 400 and the external terminal 130. Here, the input busbar 310 is used for the purpose of electrically connecting the battery module 10 and the battery management unit 400 in order for the battery management unit 400 to regulate and control the flow of current and the like between the battery module 10 and the external terminal 130.

Specifically, the first busbar 300a includes a first input busbar 310 electrically connecting the battery management unit 400 to the battery module 10 and a first output busbar 320 electrically connecting the battery management unit 400 to the external terminal 130.

In addition, the second busbar 300b includes a second input busbar 310 electrically connecting the battery management unit 400 and the battery module 10, and a second output busbar 320 electrically connecting the battery management unit 400 and the external terminal 130.

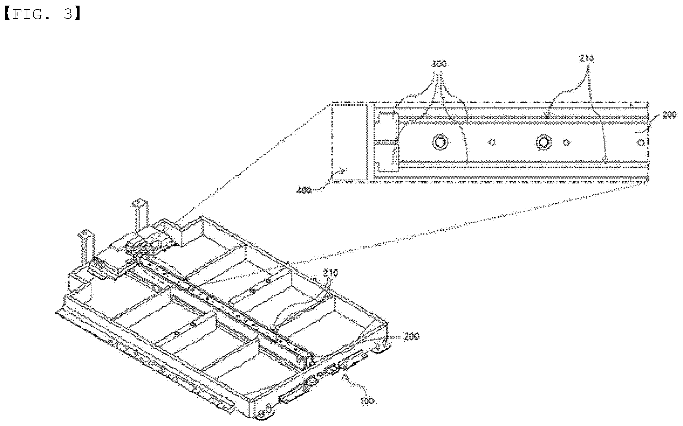

FIG. 3 is a partially enlarged view of battery pack 1000 according to a first embodiment of the present invention.

The busbar 300 protrudes from the battery management unit 400, as shown in FIG. 3, and is inserted into the slot 210 of the protective frame 200 and installed to traverse the pack case 100 along the slot 210.

The first busbar 300a is inserted into the first slot 210a of the protective frame 200, and the second busbar 300b is inserted into the second slot 210b of the protective frame 200.

More specifically, this first busbar 300a is inserted into the first slot 210a to electrically connect the battery module 10 of the first battery part 140a with the battery management unit 400, and the second busbar 300b is inserted into the second slot 210b to electrically connect the battery module 10 of the second battery part 140b with the battery management unit 400.

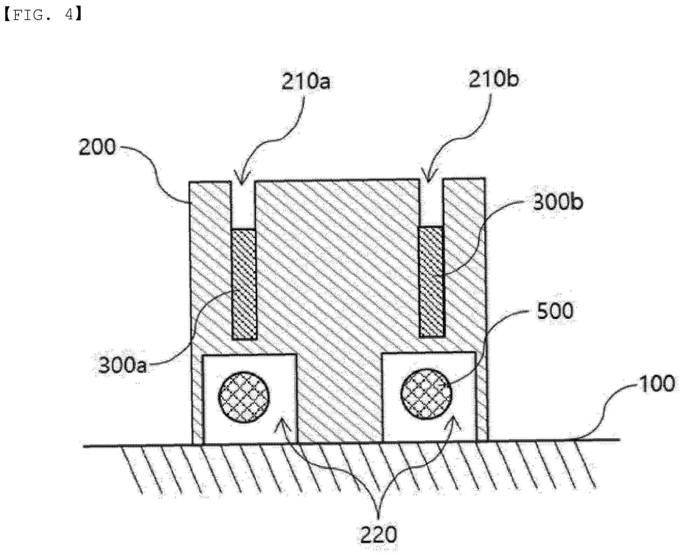

FIG. 4 is a diagram illustrating a sectional view of the protective frame 200 with the busbar 300 inserted.

Referring to the FIG. 4, the busbar 300 is inserted into the respective slots 210 with only the top surface exposed to the outside to allow both sides to be supported and surrounded by the protective frame 200. In this case, the busbar 300 may be fully protected on both sides by the protective frame 200.

The protective frame 200 may further include a through groove 230 formed to allow the slot 210 to open to the outside on a side.

The through groove 230 is inserted into the slot 210 to serve as a passage for a busbar 300 installed inside the protective frame 200 to come out, and the busbar 300 passing through the through groove 230 is connected to the module terminal 12a of the battery module 10. In other words, a busbar 300 inserted into the slot 210 and formed extending from the battery management unit 400 is brought to the outside through a through groove 230 located at the fore edge of the protective frame 200, and the busbar 300 brought to the outside is connected with the module terminals 12a of the battery module 10 at a position corresponding to the through groove 230.

Referring to FIG. 1, the through groove 230 is located at the fore edge of the protective frame 200 extending from the location of the battery management unit 400.

The through groove 230 may be formed on both sides of the protective frame 200, and may be formed in plurality on one side, as desired.

The battery pack 1000 according to a first embodiment of the present invention may further include a pair of measurement wires 500 extending along the protective frame 200.

The measurement wires 500 are used for the purpose of real-time measurement and monitoring of changes in electrical characteristics of the battery modules 10 during charging and discharging of each battery module 10, and electrically connect the battery management unit 400 and the battery modules 10.

The measurement wires 500 are installed in the lower part of the protective frame 200 as shown in FIG. 4, inserted into the insertion hole 220 of the protective frame 200, and covered by the protective frame 200 to provide protection from external impact or heat.

The measurement wires 500 include a first measurement wire 500 for measuring electrical characteristics of the battery module 10 included in the first battery part 140a and a second measurement wire 500 for measuring electrical characteristics of the battery module 10 included in the second battery part 140b. Here, the first measurement wire 500 is inserted into and protected by the first insertion hole 220 of the protective frame 200, and the second measurement wire 500 is inserted into and protected by the second insertion hole 220 of the protective frame 200.

In this manner, it becomes possible for the battery pack 1000 of the present invention to protect the busbar 300 and measurement wires 500 from externally generated fire and heat using a protective frame 200 having a plurality of slots 210 and insertion holes 220 into which the busbar 300 and measurement wires 500, which are installed across the center of the pack case 100, are inserted and covered.

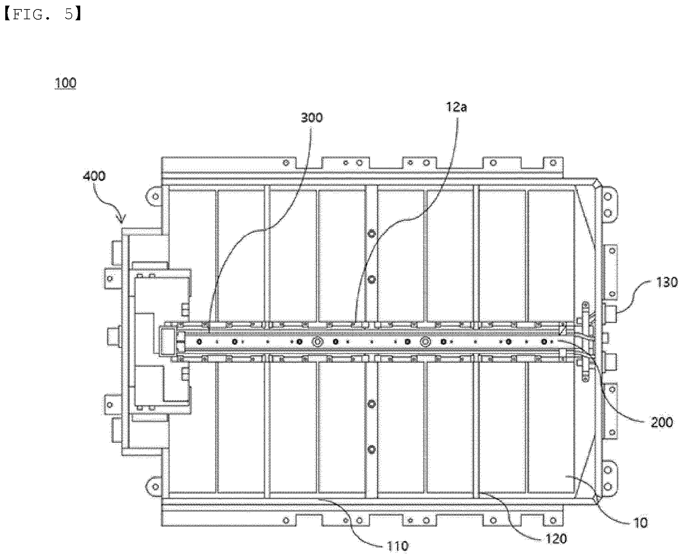

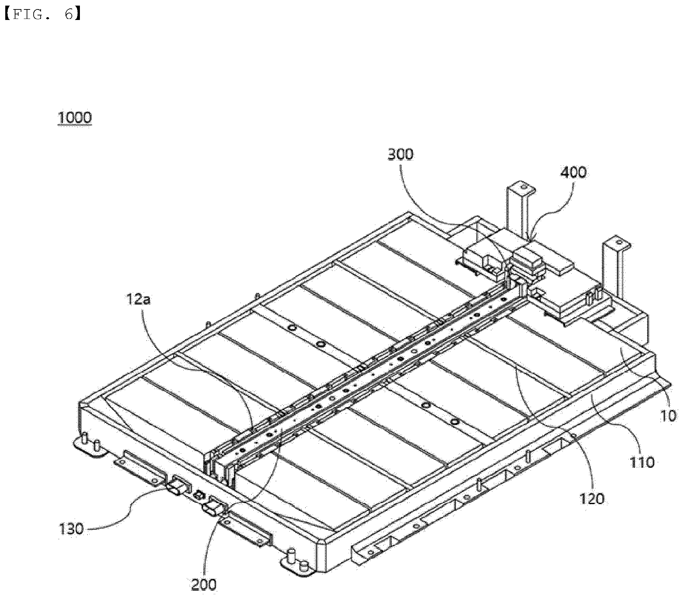

FIG. 5 is a top view of a battery pack 1000 according to a first embodiment of the present invention (not showing the top case), and FIG. 6 is a perspective view of the battery pack 1000 of FIG. 5.

Referring to the FIG. 5 and FIG. 6 above, a plurality of battery modules 10 are arranged in parallel in the first battery part 140a and the second battery part 140b on both sides of the protective frame 200, respectively.

The battery module 10 is stored in the module area allowing the module terminals 12a to face the protective frame 200 as shown in FIG. 5 and FIG. 6.

If each battery module 10 stored in the first battery part 140a and the second battery part 140b is subjected to a thermal runaway inside, resulting in high temperature and high pressure gas, the gas may be emitted in the direction of the end plate 12 on which the module terminals 12a are formed. In other words, gases of high temperature and high pressure may be emitted toward the busbar 300 and measurement wire 500 located in the center of the pack case 100.

The battery pack 1000 according to the first embodiment of the present invention has the advantage that the busbar 300 and the measurement wires 500 can be protected by the protective frame 200 even if a thermal runaway occurs inside any one of the battery modules 10, resulting in high temperature and high pressure gases.

### [Second embodiment]

The battery pack 1000 according to a second embodiment of the invention is characterized in that it includes, in addition to the protective frame 200 of the first embodiment, an auxiliary frame 600 that can be coupled to the protective frame 200.

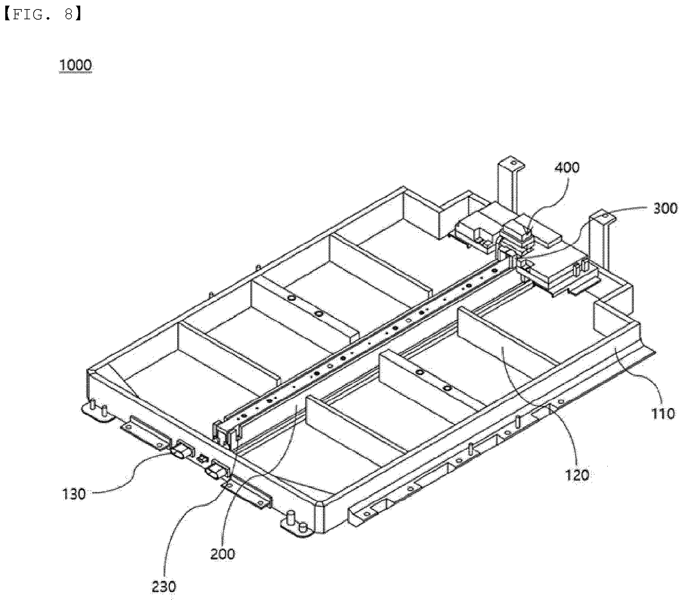

FIG. 7 is a cross-sectional view of the protective frame 200 and auxiliary frame 600 of the battery pack 1000 according to a second embodiment of the present invention, and FIG. 8 is a perspective view of the battery pack 1000 (without the battery module 10) with the protective frame 200 and auxiliary frame 600 of FIG. 7.

The auxiliary frame 600 has a structure extending from a lower part of the protective frame 200 along a length direction of the protective frame 200, and is coupled to the protective frame 200.

The auxiliary frame 600 includes an upper protrusion 600a protruding from the top as shown in FIGS. 7 and 8, the upper protrusion 600a extending along the longitudinal direction of the auxiliary frame 600.

The protective frame 200 of the battery pack 1000 according to the second embodiment includes a lower insertion part 200a that is recessed along its length to allow insertion of the upper protrusion 600a of the auxiliary frame 600.

Specifically, the lower insertion part 200a is formed in the space between the first slot 210a and the second slot 210b as shown in FIG. 7, and more specifically between a pair of insertion holes 220 formed in the lower part of the protective frame 200.

In this case, a stepped part 240 may be formed in the area where the existing insertion hole 220 is formed by the formation of the lower insertion part 200a.

Between the protective frame 200 and the auxiliary frame 600, a pair of auxiliary insertion holes 250 may be formed, which are compartmentalized and formed by the upper protrusion 600a of the auxiliary frame 600.

More specifically, the auxiliary frame 600 may be coupled with the protective frame 200 by inserting the upper protrusion 600a into the lower insertion part 200a of the protective frame 200, whereby the auxiliary insertion hole 250 surrounded by the protective frame 200 and the auxiliary frame 600 is formed as the area with the stepped part 240 is compartmentalized by the upper protrusion 600a.

The auxiliary insertion hole 250 formed above extends along the longitudinal direction of the protective frame 200 and the auxiliary frame 600.

The auxiliary frame 600 includes an auxiliary slot 610 at the top extending along a longitudinal direction of the auxiliary frame 600, as shown in FIG. 7.

The upper part of the auxiliary frame 600 may include a plurality of auxiliary slots 610, wherein an auxiliary slot 610 may be formed on each side of the upper protrusion 600a.

In the auxiliary slot 610, an additional busbar 300 may be inserted, preferably an output busbar 320 is inserted that connects the battery management unit 400 to the external terminals 130 of the pack case 100. In other words, in the slot 210 of the protective frame 200, an input busbar 310 may be inserted and secured, and in the auxiliary slot 610 of the auxiliary frame 600, an output busbar 320 may be inserted and secured.

More specifically, in the first slot 210a of the protective frame 200, a first input busbar 310 that connects the battery modules 10 of the first battery part 140a and the battery management unit 400 is inserted. In the second slot 210b, a second input busbar 310 that connects the battery modules 10 of the second battery part 140b and the battery management unit 400 is inserted. In the auxiliary slot 610 of the auxiliary frame 600 corresponding to the first slot 210a of the protective frame 200, a first output busbar 320 is inserted, which is electrically connected to the first input busbar 310 and connects the battery management unit 400 and the external terminals 130. In the auxiliary slot 610 of the auxiliary frame 600 corresponding to the second slot 210b of the protective frame 200, a second output busbar 320 is inserted, which is electrically connected to the second input busbar 310 and connects the battery management unit 400 and the external terminals 130.

In this way, the busbar 300 installed to cross the center of the pack case 100 may be divided into two sides by the slot 210 of the protective frame 200 and the auxiliary slot 610 of the auxiliary frame 600, and the busbar 300 divided into two sides as described above may be divided up and down by the coupling structure of the protective frame 200 and the auxiliary frame 600.

The protective frame 200 is preferably coupled to the upper part of the auxiliary frame 600 at both lower ends to cover the auxiliary slots 610 of the auxiliary frame 600, as shown in FIG. 7. In other words, by the coupling of the protective frame 200 and the auxiliary frame 600, the upper part of the auxiliary slot 610 is entirely covered by the protective frame 200. Therefore, the busbar 300 inserted into the auxiliary slot 610 may be protected on both sides and on the lower surface by the auxiliary slot 610 and on the upper surface by the protective frame 200.

The measurement wires 500 may be seated on either side of the upper protrusion 600a of the auxiliary frame 600, and may be covered and protected by the protective frame 200. Specifically, the measurement wire 500 may be inserted into and protected by the auxiliary insertion hole 250. Here, the auxiliary insertion hole 250 may be formed on top of the auxiliary slot 610 to share the same space as the auxiliary slot 610.

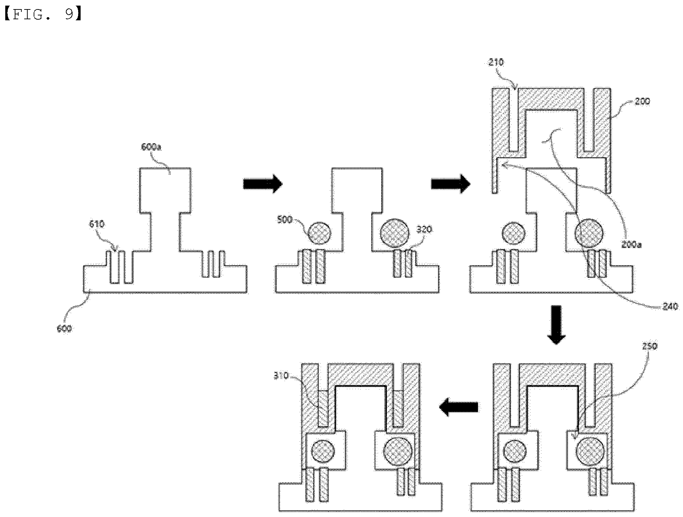

FIG. 9 is a sequential illustration of the coupling of the auxiliary frame 600 and the protective frame 200 and the insertion and seating of each busbar 300 and measurement wire 500.

Referring to FIG. 9, an auxiliary frame 600 is installed and secured to the bottom of the pack case 100, an output busbar 320 is inserted into an auxiliary slot 610 of the auxiliary frame 600, and a measurement wire 500 is secured on top of the auxiliary slot 610 in which the output busbar 320 is inserted. Thereafter, the protective frame 200 is coupled with the auxiliary frame 600 to cover the measurement wires 500 and the output busbar 320, and the input busbar 310 is inserted into the slot 210 of the protective frame 200 and installed.

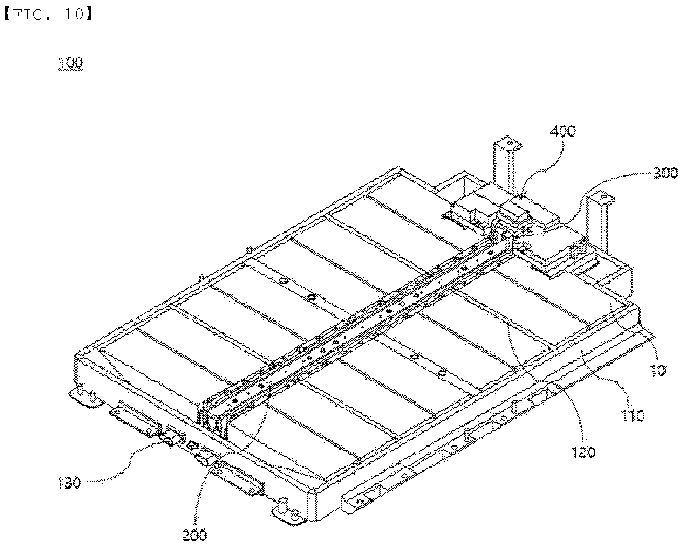

Figure 10 is a perspective view of a pack case 100 according to a second embodiment of the present invention.

Referring to FIG. 10, a plurality of battery modules 10 are arranged in parallel on either side of the protective frame 200 and the auxiliary frame 600, respectively.

The battery module 10 is stored in the module area so as to face the protective frame 200 and the auxiliary frame 600, as shown in FIG. 10.

The battery pack 1000 according to the second embodiment of the present invention has the effect that the busbar 300 and the measuring wire 500 can be protected by the protective frame 200 and the auxiliary frame 600 even if a thermal runaway occurs inside any one of the battery modules 10, resulting in high temperature and high pressure gases.

The present invention has been described in more detail above with reference to the drawings and embodiments. However, it is to be understood that the configurations shown in the drawings or embodiments described herein are only one example embodiment of the invention and do not represent all of the technical ideas of the invention, and that there may be various equivalents and modifications that may be substituted for them in the present application.

### [Description of Reference Numerals]

1000: battery pack
10: battery module
11: module frame
12: end plate
12a: module terminal
100: pack case
110: side wall
120: wall
130: external terminal
140: module area
140a: first battery part
140b: second battery part
200: protective frame
200a: lower insertion part
210: slot
210a: first slot
210b: second slot
220: insertion hole
230: through groove
240: stepped part
250: auxiliary insertion hole
300: busbar
300a: first busbar
300b: second busbar
310: input busbar
320: output busbar
400: battery management unit
500: measurement wire
600: auxiliary frame
600a: upper protrusion
610: auxiliary slot

## Claims

1. A battery pack, comprising: a pack case that comprises external terminals formed on one side and contains a plurality of battery modules inside; and
a protective frame that extends across the pack case and defines a module area;
a busbar that electrically connects the battery modules and the external terminals of the pack case; and
a battery management unit located on the other side opposite to the pack case from where the external terminals are formed; and
the protective frame includes slot extending along the length direction of the protective frame, and the module area is compartmentalized by the protective frame and comprises a first battery part formed on one side of the protective frame and a second battery part formed on the opposite side of the protective frame, and the busbar is inserted and secured within the slots of the protective frame, and the protective frame surrounds its sides.

2. The battery pack of Claim 1, wherein the slots comprising: a first slot; and a second slot; formed in parallel and spaced apart at a predetermined distance from an upper part of the protective frame.

3. The battery pack of Claim 1, wherein a through groove is formed in the side of the protective frame to allow the slot to open to the outside.

4. The battery pack of Claim 1, wherein the busbar comprises a first busbar connecting the first battery part and the external terminal, and a second busbar connecting the second battery part and the external terminal.

5. The battery pack of Claim 4, wherein the first busbar comprises a first input busbar that electrically connects the battery management unit and the battery module and a first output busbar that electrically connects the battery management unit and the external terminals, and the second busbar comprises a second input busbar that electrically connects the battery management unit and the battery module and a second output busbar that electrically connects the battery management unit and the external terminals.

6. The battery pack of Claim 1, further comprising, a pair of measurement wires connected to the battery management unit and extending along the protective frame, and
wherein the protective frame comprises an insertion hole for allowing insertion of the measurement wires.

7. The battery pack of Claim 6, the insertion holes comprising: a first insertion hole; and a second insertion hole; formed in parallel and spaced apart at a predetermined distance in the lower part of the protective frame into which the measurement wires are respectively inserted.

8. The battery pack of Claim 7, further comprising, an auxiliary frame extending along the protective frame at a lower part of the protective frame, and coupled to the protective frame.

9. The battery pack of Claim 8, wherein the auxiliary frame comprises an upper protrusion that protrudes in the length direction, and the protective frame includes a lower insertion part made along the length direction to allow for the insertion of the upper protrusion of the auxiliary frame, and
the auxiliary frame can be coupled to the protective frame by inserting the upper protrusion into the lower insertion part of the protective frame.

10. The battery pack of Claim 9, wherein the auxiliary frame comprises an auxiliary slot extending along a longitudinal direction of the auxiliary frame at the upper part.

11. The battery pack of Claim 1, wherein the protective frame is coupled to the upper part of the auxiliary frame with both lower parts covering the auxiliary slots of the auxiliary frame.

12. The battery pack of Claim 10, wherein the protective frame and the auxiliary frame include a pair of auxiliary insertion holes compartmentalized and formed between the protective frame and the auxiliary frame by an upper protrusion of the auxiliary frame.

13. The battery pack of Claim 1, wherein the battery modules is arranged in parallel in the module area along a length direction of the protective frame.
